(19) Europäisches Patentamt
European Patent Office
Office européen des brevets

(11) Publication number: **0 252 185**
**A1**

(12) # EUROPEAN PATENT APPLICATION

(21) Application number: **86201211.9**

(22) Date of filing: **11.07.86**

(51) Int. Cl.⁴: **B01J 47/12**, B01J 47/00, G03C 5/395, C22B 3/00

(43) Date of publication of application: **13.01.88 Bulletin 88/02**

(84) Designated Contracting States: **AT BE CH DE FR GB IT LI LU NL SE**

(71) Applicant: **AGFA-GEVAERT naamloze vennootschap**
**Septestraat 27**
**B-2510 Mortsel(BE)**

(72) Inventor: **De Rycke Gino,Luc**
**Graaf d' Urselstraat 1**
**B-2510 Mortsel(BE)**

(54) **Process and apparatus for the removal of dissolved silver complex anions from aqueous liquids.**

(57) Silver complex anions present in dissolved form in an aqueous liquid are removed by causing the liquid to flow along the surface of at least one element in the form of a sheet or web which incorporates an anion exchange resin as scavenging agent in particulate form dispersed in a water-permeable binder layer. In a particular embodiment shown in the accompanying drawing a solution containing anions containing complexed silver stemming from fixed photographic silver halide emulsion materials is pumped into a column (12) containing a spirally wound web (13) carrying particulate anion exchange resin in a water-permeable binder layer. The silver-containing solution flows between the convolutions of the spirally coiled web, in contact with said layer whereby the anions are scavenged without clogging of the column when hydrophilic colloid material is present in said solution.

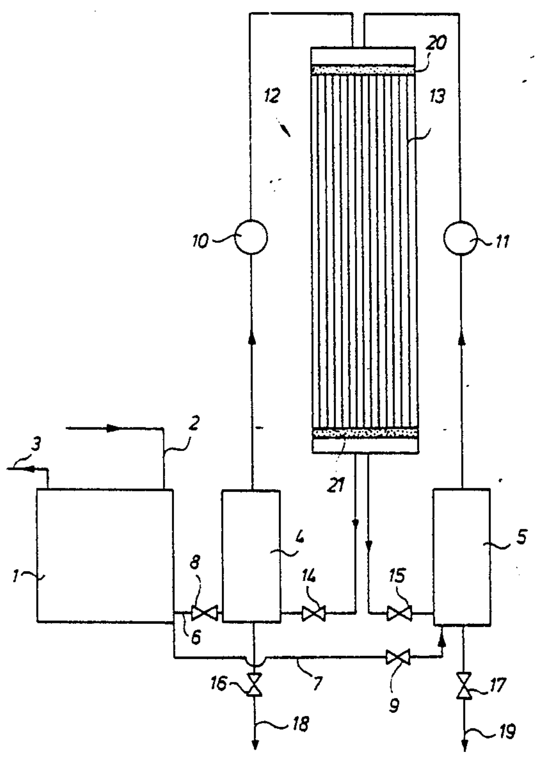


EP 0 252 185 A1

# PROCESS AND APPARATUS FOR THE REMOVAL OF DISSOLVED SILVER COMPLEX ANIONS FROM AQUEOUS LIQUIDS

The present invention relates to a process for removing silver from an aqueous liquid wherein the silver is present in dissolved form as a complex anion.

The recovery of silver from aqueous solutions, e.g. solutions recovered from the processing of photographic silver halide emulsion materials is not only of economic interest but is also a demand imposed by state regulations pertaining to the environment.

There exist already many techniques for silver recovery from photographic processing liquids. A survey of these is given e.g. by Günter Kolf in the publication: "Silber-Recycling aus fotografische Lösungen : Eine übersicht über die Verfahren", - Chemie für Labor und Betrieb, 32 -2 (1981) p. 43-48.

In the recovery of silver from aqueous liquids containing silver in dissolved form the following techniques have been applied:

1) reduction of the dissolved silver compounds to metallic silver by less noble metal, so-called metal replacement,

2) reduction of dissolved silver compounds to silver metal by means of a dissolved organic or inorganic reducing agent,

3) electrolytic reduction,

4) chemical precipitation in the form of insoluble silver salts,

5) chemical binding to ion-exchange resins,

6) dialysis or reversed osmosis using special membranes, e.g. ion-exchange membranes to concentrate the dissolved silver salts.

The recovery of silver from fixing and bleach-fixing liquids containing dissolved silver complex compounds is usually performed by metallic replacement using iron in the form of steel wool or by electrolysis.

The recovery of silver from aqueous rinsing liquids which contain the silver in very diluted form is usually effected by means of ion-exchange resins.

From an economic standpoint the recovery of silver from spent fixing liquids is of particular importance, whereas the removal of silver from rinsing liquids, so-called wash water effluents, is more a problem of complying with regulations restricting the noble metal content of liquids which are to be drained to the sewer.

The use of ion-exchange resin pellets or granules for scavenging the silver contained in aqueous rinsing liquids following the fixing of gelatin-silver halide emulsion layers is not without problems. Indeed, as described e.g. by Robert T. Kreiman in Journal of Imaging Technology, Vol. 10, Number 6, Dec. 1984 - p. 244, when cascading photographic wash water through a resin column, a combination of gelatin and bacterial slime will gradually plug the column causing a build-up of back pressure. Eventually this will either stall the pump or force a channel through the resin through which the water can pass so that it is no longer distributed through the resin bed as required for ion-exchange. Regularly the resin bed in the column has to be fluidized to wash out the trapped gelatin and to declog the column. Therefor the resin columns are always used as a pair wherein one is in operation and the other is subjected to declogging and cleaning.

The problem of clogging the interstices between the granular ion-exchange particles is particulary liable to occur in wash-off processing systems wherein colloidal binder enters the wash water together with undeveloped and possibly complexed silver salts and that wash water has then to be freed from silver. Wash-off processing occurs, e.g. following tanning development of gelatin-silver halide emulsion layers as described e.g. in GB-P 812,673 and 1,231,194 or following degradation of gelatin by the intermediary of a developed silver image as described e.g. in US-P 4,203,765.

It is an object of the present invention to provide a very convenient and effective process for the continuous removal of an anionic silver complex compound from a flowing aqueous liquid in which said complex is present in dissolved form as in photographic silver halide fixing solutions, using an anion-exchange resin capturing said anionic silver complex without problems with regard to blockage of the liquid flow.

Another particular object of the invention is to provide a process by which silver is recovered from aqueous liquids that have been applied in the fixing of photographic silver halide emulsion materials and by which the silver content of the liquid thereby can be reduced to a level wherein the water can be recycled or is tolerable in sewerage under various state environmental control regulations.

Other objects and advantages of the present invention will become clear from the further description.

According to the present invention there is provided a process for removing an anionic silver complex compound from an aqueous liquid in which it is present in dissolved form, by causing such liquid to flow in contact with a particulate anion exchange resin capable of scavenging silver containing anions, characterized in that there is provided at least one element being a self-sustaining or supported layer (hereafter called "scavenging layer") along which said anion exchange resin is distributed in a hydrophilic water-permeable binder, and said liquid is caused to stream along at least one surface of such layer.

By this process anions containing complexed silver can be removed in a continuous manner from a flowing aqueous liquid.

The process is very well suited for use in recovering silver from spent fixing and washing liquids used in the processing of exposed photographic silver halide emulsion materials. The one or more elements providing the scavenging layer(s) can be installed in a closed circuit with the photographic processing apparatus so that water stemming from the de-silvered liquids can be recycled. The process can be performed without suffering from the problems of blockage which are encountered when flowing liquid containing hydrophilic colloid material through a column of ion exchange pellets or granules. It may operate with gravity flow.

In certain embodiments of the invention, use is made of at least one said element comprising a said scavenging layer carried by a supporting substrate in the form of a sheet, web or screen. Binder elements containing particulate anion exchange resin can be easily fabricated in that form. Examples of very suitable supporting substrate materials are fabric and paper. A paper substrate can if desired be coated, e.g. with a polyethylene or other water-impermeable coating. Other advantageous substrate materials are film-forming resins. For example the supporting substrate can be a polyethylene terephthalate support as used in the production of photographic silver halide emulsion layer materials. The term "web" denotes an elongate coilable substrate of any width.

According to an embodiment use is made of at least one said element comprising a said scavenging layer or layers carried by a supporting substrate in the form of a sheet or web which can be burned without leaving a substantial amount of ashes. An example of such an element is one comprising a paper substrate carrying a scavenging layer comprising an anion exchange polymer dispersed in powder form in a water-absorbing hydrophilic binder. From such an element silver can be separated by incineration without interference by the material of the substrate. For economic reasons, however, the anion exchange resin loaded with complexed silver is regenerated, e.g. by treating the scavenging layer with a concentrated aqueous solution of sodium chloride, exchanging the silver complex anions by chloride anions.

According to another embodiment a said water-permeable layer containing the anion exchange resin can be applied, e.g. by dipping, onto a supporting substrate in the form of a screen, e.g. a metal wire grid, wherefrom said layer can be washed away readily by means of hot water under pressure after the layer has become loaded to its saturation capacity with the scavenged anionic silver complex compounds.

Suitable binders for use in a said binder-type layer comprise regenerated cellulose, hydrolysed cellulose triacetate, cellulose ether phthalate, gelatin, polyvinyl alcohol and hydrophilic binding agents that are swollen in aqueous medium, e.g. a polymer containing recurring units carrying free carboxylic acid groups in conjunction with water-insoluble recurring units, a preferred example thereof being a copolymer of crotonic acid and vinylacetate.

Any of these binders is optionally mixed with hydrated silica, e.g. hydrated colloidal silica having an average grain size of 0.025 micrometer and/or latex particles including hydrophilic recurring units, e.g. acrylic acid units.

The invention includes processes wherein use is made of at least one said element comprising two scavenging layers which are carried on opposite sides of a supporting substrate and liquid is caused to stream along the exposed surfaces of both such scavenging layers. A high scavenging capacity per unit area of element can thereby be achieved.

The anion-exchange resin can be used in the form of powder particles e.g. with a size in the range of e.g. from 200 micrometer to 10 micrometer.

Information about the structure and preparation of anion exchange resins is given e.g. by Robert Kunin in the book "Ion Exchange Resins", New York - John Wiley & Sons, Inc., London - Chapman & Hall, Ltd. (1958) p. 55-97.

For the removal of silverthiosulphate complex anions from aqueous liquids by anion exchange the following resins defined by structural formula in the following Table are particularly useful.

TABLE

No. Structural formula

1.

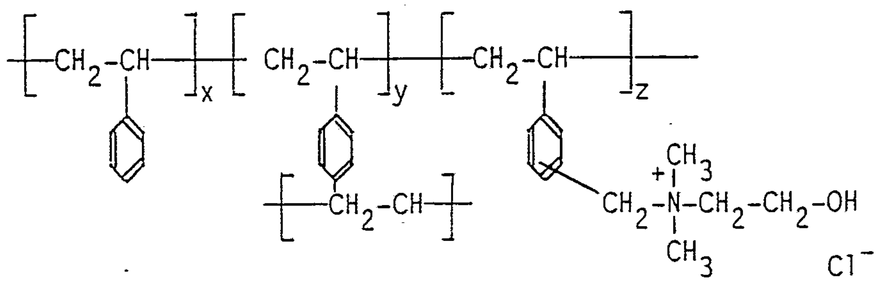

wherein : z is at least 50 mole %, and
y is from 1 to 10 mole %

2.

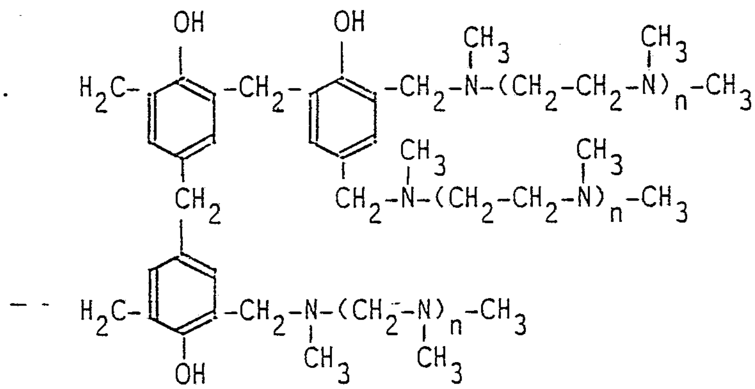

The resins containing anion exchange groups may be used in conjunction with resins that contain capturing groups for silver cations, e.g. thiol or thiourea groups. Such resins are e.g. polyvinyl mercapto-acetate and phenylthiourea resins having a high affinity towards silver ions. The use of phenylthiourea resins in the rejuvenation of spent photographic fix solutions is described in Photographic Science and Engineering, Vol. 17, Nr. 3, May/June 1973, p. 284.

Examples of polymers containing anionic onium groups, more particularly quaternary ammonium groups in conjunction with thiol or tautomeric thione groups are described e.g. in the Democratic German Republic (DD) patent 222,339.

The one or more elements used in the process can be arranged in a flow-through passageway, e.g. column, through which the liquid to be treated is pumped to cause the liquid to stream along the scavenging layer(s) of such element(s).

The element or elements is or are preferably arranged to define a flow layer passageway or passageways along which the aqueous liquid streams in contact with the scavenging layer(s). In order to provide as large a contact area as possible within a given volume, while avoiding problems caused by blocking or clogging, it is preferable for the element or elements to be arranged to define for the liquid to be treated a flow layer passageway or passageways not shallower than 0.1 mm and preferably in the range 0.1 to 5 mm.

Preferably there is a said element which forms a spiral with spaced convolutions and the aqueous liquid is flowed along a passageway or passageways between such convolutions. In order to keep neighbouring convolutions at a small distance from each other small spacers within the spiral or a corrugated structure can be provided to preserve a flow layer passage or interspace, e.g. of 0.1 to 5 mm in depth, between the neighbouring convolutions. Preferably the spiral is arranged in a cylindrical column through which the liquid to be treated is pumped.

In a particular embodiment of the invention, using a spirally coiled element, the liquid to be treated is fed into the center of the coil and flows outwardly along the spiral passageway to an outlet at the periphery of the spiral. In that case the convolutions of the coil are pushed apart by the liquid so that there is no need for spacers or a corrugated structure.

According to another embodiment, a pack or stack of undulating elements is arranged in a rectangular column. The pack incorporates spacers or projections to allow the free flow of liquid between neighbouring elements.

By the element arrangements used in the above described embodiments, treatment of a photographic processing liquid containing gelatin can be performed at a high silver recovery rate without interruption due to clogging of the flow passageway(s).

In a particular embodiment an aqueous photographic wash liquid is continuously de-silvered using scavenging elements arranged in a passageway, e.g. a column, which is connected into a closed circuit including a tank for collecting the wash liquid in the photographic processing apparatus.

The invention includes apparatus suitable for use in scavenging anionic silver complex compounds present in dissolved form in an aqeueous liquid.

An apparatus according to the present invention suitable for use in scavenging anions present in dissolved form in an aqueous liquid comprises means holding a quantity of anion exchange resin in particulate form, a flow passage via which a said liquid can be conducted to said anion exchange resin, and pumping means for pumping liquid along such passage, characterized in that said anion exchange resin is distributed along at least one self-sustaining or supported layer called "scavenging layer" in a hydrophilic waterpermeable binder layer and the apparatus is constructed to provide one or more flow passages for conducting liquid along at least one surface of such layer. Such apparatus can incorporate any of the relevant apparatus features hereinbefore referred to in describing processes according to the invention.

A particular form of apparatus according to the invention is shown in the accompanying diagrammatic drawing, which will now be referred to.

The illustrated apparatus comprises a collecting tank 1 for collecting fixing liquid that has been used in the fixing of developed photographic silver halide emulsion materials. The tank 1 has a feed line 2 and an overflow drain 3 connected to the fixing tank (not shown) in the photographic processing apparatus. The fixing liquid is fed into two distributor tanks 4 and 5 through their respective feed lines 6 and 7 which are fitted with valves 8 and 9. The contents of the tanks 4 and 5 are alternately fed into the column 12 by the pumps 10 and 11 respectively. In the column 12 (shown in cross-section) there is a spirally wound scavenging element composed of a hydrophobic resin support coated with a hydrophilic waterpermeable binder layer containing dispersed anion exchange resin on each side of said support.

The spirally wound element is held between porous plates 20 and 21. The fixing liquid is recycled several times through the column 12. Valves 14 and 15 are opened and closed alternately in coincidence with the alternate operations of the pumps 10, 11 so that at any one time the distributor tank 4 or 5 is in closed circuit communication with the column 12. After a sufficient removal of complexed silver from the fixing liquid by the anion exchange resin which is retained in the hydrophilic binder coating, the distributor tank involved is emptied via the drain line 18 or 19 by opening the associated valve 16 or 17. The lines 18 and 19 are connected to the fixing tank of the photographic processing apparatus.

Alternatively, the treatment of wash water may proceed by directly feeding wash water from a collector tank through the column and draining off the treated water to the sewer.

The invention is illustrated by but is not limited to the following examples. All ratios and percentages are by weight unless otherwise stated.

EXAMPLE 1

Onto a double-side subbed polyethylene terephthalate sheet having a thickness of 100 micrometer a scavenging layer suited for the capturing of silver thiosulphate anions was applied from a dispersion of the anion exchange resin No. 1 of the Table, which resin was used in the form of particles having an average grain size smaller than 0.15 mm in a solution in methanol of a copolymer of vinyl acetate/crotonic acid (94.6/5.4) at an anion exchanger to binding agent ratio of 2 to 3.

The coating proceeded at a coverage of 35 g of anion exchange resin per m2 at both sides of said support leaving uncoated an edge area having a width of 2 cm at both sides of the support.

Onto a sheet of the thus coated support having a length of 120 cm and a width of 25 cm spacer strips of commercially available adhesive resin tape (thickness 0.1 mm) were applied in the uncoated edge areas before giving the sheet a coiled structure. In coiled form the sheet was inserted into a laboratory test column having a diameter of 0.024 m and height of 0.30 m.

For test purposes simulating the removal of complexed silver from photographic wash water a start solution was prepared by dissolving an amount of silver nitrate corresponding with 2 mg of silver per liter and 0.5 g of sodium thiosulphate in 1 l of water. That volume of liquid was circulated at a rate of 20 ml per minute through the above column and samples were taken at time intervals from the start mentioned in the following Table. In said Table the amounts of residual silver in the circulating liquid corresponding with said time intervals are listed.

After 150 minutes of total contact with the scavenging sheet in said column the silver ion concentration was reduced to 0.08 mg per liter. According to fairly severe state regulations the silver emission in the environment may not surpass 0.1 mg per liter.

TABLE

| Time interval from the start (min) | Residual silver mg Ag/l |
|---|---|
| 0 | 2.0 |
| 15 | 1.8 |
| 30 | 1.4 |
| 45 | 1.1 |
| 60 | 0.64 |
| 90 | 0.47 |
| 120 | 0.26 |
| 150 | 0.08 |

EXAMPLE 2

The test described in Example 1 was repeated but 1 g per liter of gelatin was added to simulate the loading of wash water with gelatin stemming from washed-off silver halide emulsion layers.

The de-silvering results were the same and no clogging of the column was taking place.

## Claims

1. A process for removing an anionic silver complex compound from an aqueous liquid in which it is present in dissolved form, by causing such liquid to flow in contact with a particulate anion exchange resin capable of scavenging silver containing anions, characterized in that there is provided at least one element being a self-sustaining or supported layer (hereafter called "scavenging layer") along which said anion exchange resin is distributed in a hydrophilic water-permeable binder, and said liquid is caused to stream along at least one surface of such layer.

2. A process according to claim 1, wherein use is made of at least one said element comprising a said scavenging layer carried by a supporting substrate in the form of a sheet, web or screen.

3. A process according to claim 2, wherein said supporting substrate is composed of resin, fabric or paper optionally pre-coated with a water-impermeable coating.

4. A process according to any of claims 1 to 3, wherein said binder comprises hydrated silica, regenerated cellulose, hydrolysed cellulose triacetate, cellulose ether phthalate, gelatin, polyvinyl alcohol and/or a polymer containing recurring units carrying free carboxylic acid groups in conjunction with water-insoluble recurring units.

5. A process according to claim 4, wherein said binder is a copolymer of crotonic acid and vinylacetate.

6. A process according to any preceding claim, wherein use is made of at least one said element comprising two said scavenging layers which are carried on opposite sides of a supporting substrate and liquid is caused to stream along the exposed surfaces of both such scavenging layers.

7. A process according to any preceding claim, wherein use is made of at least one said element comprising at least one said scavenging layer which is carried by a supporting screen, and such scavenging layer(s) is (are) washed off said screen with hot water under pressure after such layer(s) has (have) become loaded with scavenged ions.

8. A process according to any preceding claim, wherein said aqueous liquid derives from a fixing or rinsing station of a photographic processing machine for photographic silver halide emulsion materials.

9. A process according to claim 8, wherein the aqueous liquid is caused to flow from a photographic fixing or rinsing station, along said scavenging layer(s) and back to said fixing or rinsing station.

10. A process according to any preceding claim, wherein said element or elements is or are arranged to define a flow layer passageway or passageways along which said aqueous liquid streams in contact with said scavenging layer(s).

11. A process according to claim 10, wherein there is a said element which forms a spiral with spaced convolutions and the aqueous liquid flows along a passageway or passageways between such convolutions.

12. Apparatus suitable for use in scavenging anions present in dissolved form in an aqueous liquid which apparatus comprises means holding a quantity of anion exchange resin in particulate form, a flow passage via which a said liquid can be conducted to said anion exchange resin, and pumping means for pumping liquid along such passage, characterised in that said anion exchange resin is distributed along at least one self-sustaining or supported layer called "scavenging layer" in a hydrophilic waterpermeable binder layer and the apparatus is constructed to provide one or more flow passages for conducting liquid along at least one surface of such layer.

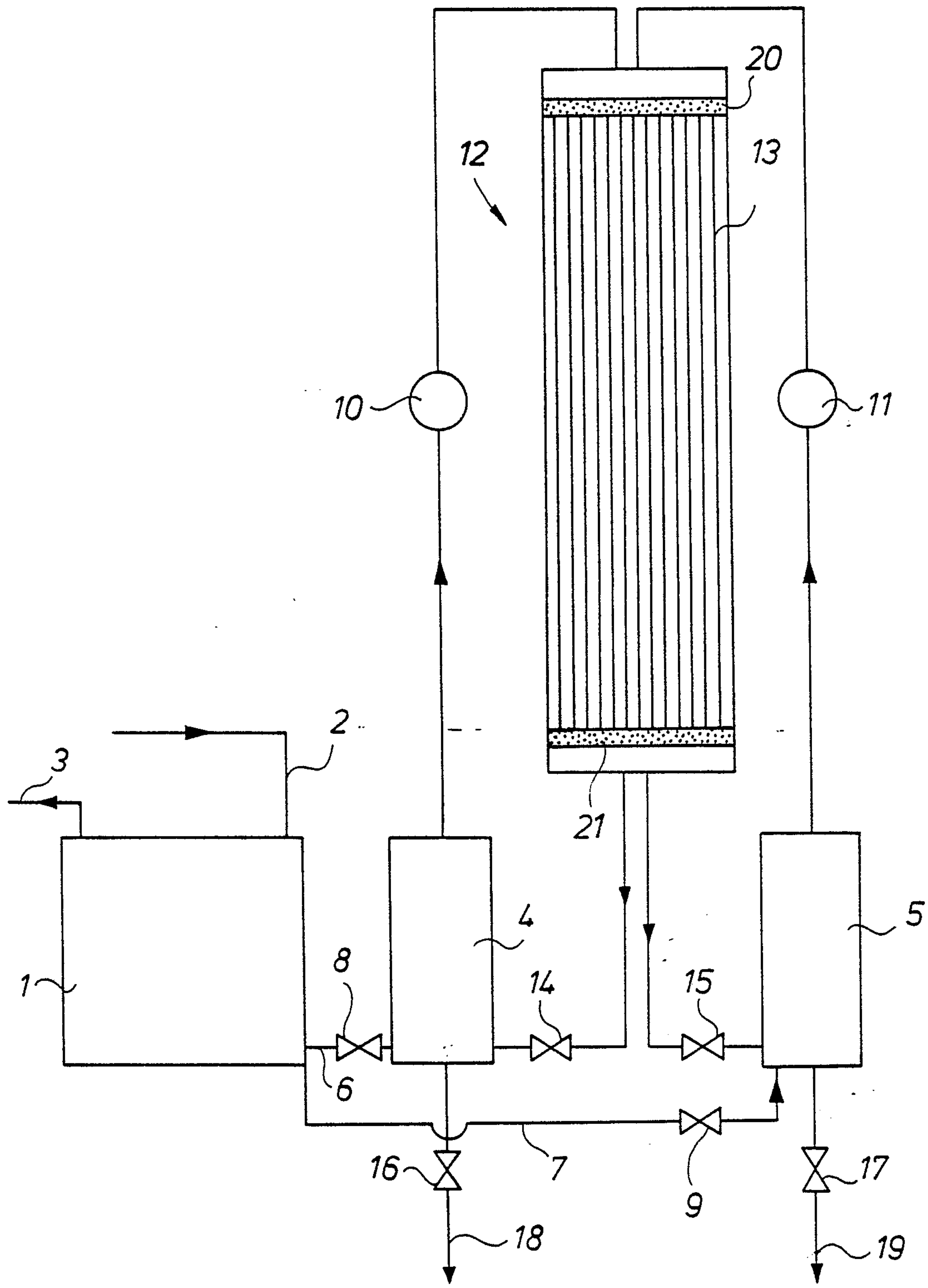
20
12
13
10
11
2
3
21
4
5
1
8
14
15
6
7
9
16
17
18
19

European Patent Office

# EUROPEAN SEARCH REPORT

Application number

EP 86 20 1211

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 916 656 (NATIONAL RESEARCH DEVELOPMENT) * Page 1, line 21 - page 2, line 86 * | 1-3 | B 01 J 47/12<br>B 01 J 47/00<br>G 03 C 5/395<br>C 22 B 3/00 |
| X | GB-A- 836 155 (U.K.A.E.A.) * Page 2, line 68 - page 3, line 125 * | 1-3,10,12 | |
| X | GB-A- 926 873 (NATIONAL RESEARCH DEVELOPMENT) * Page 2, example 1, claims 1-4; page 3, claim 11 * | 1-3 | |
| A | GB-A- 980 185 (AMERICAN CYANAMID CO.) * Page 2, line 50 - page 3, line 51 * | 4,6 | **TECHNICAL FIELDS SEARCHED (Int. Cl.4)** |
| A | DE-A-2 355 677 (FUJI PHOTO) * Page 1, lines 1-4; pages 21,22 * | 1,8,9 | B 01 J<br>G 01 C |

The present search report has been drawn up for all claims

| Place of search | Date of completion of the search | Examiner |
|---|---|---|
| THE HAGUE | 05-03-1987 | WENDLING J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82